(19) Europäisches Patentamt
European Patent Office
Office européen des brevets

(11) Veröffentlichungsnummer : **0 085 902**
**B1**

(12) # EUROPÄISCHE PATENTSCHRIFT

(45) Veröffentlichungstag der Patentschrift : **05.04.89**

(51) Int. Cl.[4] : **C 01 B 33/28**

(21) Anmeldenummer : **83100740.6**

(22) Anmeldetag : **27.01.83**

(54) **Verfahren zur kontinuierlichen Umwandlung von Metakaolin in feinstteiliges zeolithisches Natriumaluminiumsilikat.**

(30) Priorität : **04.02.82 DE 3203777**

(43) Veröffentlichungstag der Anmeldung : **17.08.83 Patentblatt 83/33**

(45) Bekanntmachung des Hinweises auf die Patenterteilung : **05.04.89 Patentblatt 89/14**

(84) Benannte Vertragsstaaten : **DE GB**

(56) Entgegenhaltungen :
**EP-A- 0 012 248**
**EP-A- 0 016 393**
**EP-A- 0 027 228**
**DD-A- 132 069**

(73) Patentinhaber : **Henkel Kommanditgesellschaft auf Aktien**
**Postfach 1100 Henkelstrasse 67**
**D-4000 Düsseldorf-Holthausen (DE)**

**Degussa Aktiengesellschaft**
**Degussa AG Fachbereich Patente Rodenbacher Chaussee 4 Postfach 1345**
**D-6450 Hanau 1 (Stadtteil Wolfgang) (DE)**

(72) Erfinder : **Christophliemk, Peter, Dr.**
**Rudolf-Breitscheid-Strasse 61**
**D-4000 Düsseldorf 13 (DE)**
Erfinder : **Wüst, Willi, Dr.**
**Fasanenring 32**
**D-4030 Ratingen-Hösel (DE)**

**EP 0 085 902 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist ein Verfahren zur kontinuierlichen Umwandlung von Metakaolin in feinstteiliges, gritarmes, wasserhaltiges zeolithisches Natriumaluminiumsilikat der Zusammensetzung :

$$0{,}9 \text{ bis } 1{,}1\ Na_2O : 1\ Al_2O_3 : 1{,}8 \text{ bis } 2{,}3\ SiO_2,$$

welches zumindestens 99,8 Gewichtsprozent eine Teilchengröße von kleiner als 25 $\mu$m sowie ein hohes Kationenaustauschvermögen aufweist und in Form einer wäßrig alkalischen Suspension anfällt,

a) durch Umsetzen von Metakaolin mit Natriumhydroxid bei erhöhten Temperaturen
b) in einer wäßrig alkalischen Suspension, die eine Zusammensetzung entsprechend Molverhältnissen von

$$1{,}5 \text{ bis } 5\ Na_2O : 1\ Al_2O_3 : 1{,}8 \text{ bis } 2{,}3\ SiO_2 : 40 \text{ bis } 200\ H_2O$$

aufweist und durch Vermischen von Metakaolin mit wäßriger Natronlauge gewonnen wird.

Die sogenannten Zeolithe bilden eine Mineralklasse kristallwasserhaltiger Alkalimetallaluminiumsilikate mit definierter Poren- und Hohlraumstruktur ihres Aluminiumsilikat-Gitters. Synthetische Zeolithe haben eine zunehmende technische Bedeutung gewonnen und werden beispielsweise als Kationenaustauscher vor allem zum Enthärten von Wasser, als Katalysatorträger bei chemischen Prozessen, als Trocken-, Trenn- oder Sorptionsmittel für Lösungsmittel und Gase (« Molekularsiebe ») sowie als heterogene anorganische Builderstoffe in Wasch- und Reinigungsmitteln eingesetzt. Je nach Verwendungszweck sind strukturell unterschiedliche Zeolith-Typen sowie ferner unterschiedliche Trocken- und Reinheitsgrade derselben erforderlich. Üblicherweise werden solche Zeolithe zunächst in ihrer Natriumform hergestellt und — falls erwünscht — anschließend durch Kationenaustausch in andere Formen umgewandelt.

Im Hinblick auf die vorstehend erwähnten Anwendungszwecke hat insbesondere das zeolithische Natriumaluminiumsilikat vom Typ NaA technische Bedeutung erlangt. Die chemische Zusammensetzung dieses Zeolith-Typs entspricht in etwa der Summenformel :

$$0{,}9 \text{ bis } 1{,}1\ Na_2O : 1\ Al_2O_3 : 1{,}8 \text{ bis } 2{,}3\ SiO_2 : 0 \text{ bis } 6\ H_2O.$$

Das charakteristische Röntgenbeugungsdiagramm des Zeoliths NaA ist beispielsweise in der deutschen Auslegeschrift DE-B 10 38 017 beschrieben.

Für die meisten technischen Anwendungszwecke wird ein sehr feinteiliger Zeolith mit einer möglichst engbandigen Korngrößenverteilung mit Korngrößen unter 10 $\mu$m bevorzugt. Insbesondere bei Verwendung des Zeoliths NaA in Wasch- und Reinigungsmitteln soll darüber hinaus dessen Anteil an Teilchen mit einer Korngröße oberhalb 25 $\mu$m nicht mehr als 0,2 Gewichtsprozent betragen sowie ferner dessen Kationenaustauschvermögen möglichst hoch sein. Der Teilchen-Anteil größer als 25 $\mu$m — nachfolgend als « Grit » bezeichnet — läßt sich durch Naßsiebung nach Mocker ermitteln (DIN 53 580). Für den Einsatz des Zeoliths NaA in Waschmitteln kann gegebenenfalls ein Grit-Gehalt von weniger als 0,1 Gewichtsprozent erwünscht sein. In diesem Falle ist die Bestimmung des Grit-Gehaltes nach einer modifizierten Methode — druckfreie Naßsiebung über ein 50 $\mu$m Sieb — zweckmäßig.

Bei der Herstellung zeolithischer Alkalialuminiumsilikate lassen sich zwei prinzipiell unterschiedliche Synthesewege beschreiten. Es sind dies :

1. Die Kristallisation von Alkalialuminiumsilikat-Gelen, die durch Umsetzung einer wäßrigen Alkalialuminatlösung mit einer wäßrigen Alkalisilikatlösung in Gegenwart von überschüssigem Alkali gebildet werden. Auf diesem Wege lassen sich kationenaustauschende Produkte gewinnen, die weniger als 100 ppm an störenden Verunreinigungen enthalten. Diese Verfahren sind jedoch relativ aufwendig, da die als Aluminat- und Silikatkomponenten verwendeten technischen Produkte erst aus anderen Rohstoffen hergestellt werden müssen.

2. Die Umwandlung von gegebenenfalls aktivierten mineralischen Aluminiumsilikat-Komponenten in stark alkalischer Lösung.

Diese Umwandlung fester, vorzugsweise mineralischer Aluminiumsilikate in zeolithische Alkalialuminiumsilikate durch Behandlung mit Alkali wird im folgenden als Zeolithisierung bezeichnet.

Durch Verwendung mineralischer, in der Erdrinde weit verbreiteter Aluminiumsilikate läßt sich die Herstellung der zeolithischen Alkalialuminiumsilikate erheblich verbilligen und vereinfachen. Insbesondere kommen hierfür Mineralien der Kaolinit-Gruppe (beispielsweise Kaolinit, Nakrit, Dickit und Halloysit), nachfolgend als « Kaolin » bezeichnet, in Betracht. Kaolin ist ein in der Erdrinde weit verbreitetes Verwitterungsprodukt des Feldspats. Die Zusammensetzung kann von Lagerstätte zu Lagerstätte stark schwanken. Je nach Vollständigkeit der Feldspat-Verwitterung und der geologischen Vorgeschichte enthält Kaolin neben dem Hauptmineral Kaolinit als mineralische Nebenbestandteile noch Quarzsand, Glimmer, andere Tonminerale sowie insbesondere nichtverwitterten Feldspat. Organische Beimengungen

bestehen vorwiegend aus Bitumina und Huminstoffen. Alle diese bei vielen technischen Verwendungen des Kaolins störenden Verunreinigungen lassen sich durch Schlämmung weitgehend entfernen. Derartige geschlämmte Kaoline, sogenannte Feinkaoline, sind marktgängig mit über 90 % Kaolinit erhältlich.

Kaolinit weist eine theoretische Bruttozusammensetzung von $Al_2O_3 \cdot 2\ SiO_2 \cdot 2\ H_2O$ auf. Die chemische Zusammensetzung des käuflichen Kaolins weicht von dieser jedoch unter Umständen insbesondere wegen der bereits erwähnten mineralischen Verunreinigungen erheblich ab. Dies macht sich insbesondere im Molverhältnis $SiO_2 : Al_2O_3$ bemerkbar. Zur Zeolithisierung insbesondere geeignet sind Kaoline mit Molverhältnissen $SiO_2 : Al_2O_3$ im Bereich von 1,8 bis 2,3.

Die Schichtstruktur des Kaolinits einerseits und die Gerüststruktur der Zeolithe andererseits sind sehr unterschiedlich voneinander. Kaolinit läßt sich erst dann zeolithisieren, wenn seine Schichtstruktur zuvor zerstört wird. Diese Umwandlung des hochkristallinen Kaolinits in den röntgenamorphen sogenannten Metakaolinit — auch Destrukturierung genannt — erfolgt am einfachsten durch Calcinierung bei 550 bis 800 °C. Zu hohe Calcinierungstemperaturen führen zu einem « Tot »-brennen des Kaolins ; es bilden sich dann Mullit-Phasen aus, die nicht mehr zeolithisierfähig sind. Die Destrukturierung des Kaolins zu Metakaolin kann prinzipiell jedoch auch mechanisch — durch gründliches Vermahlen — oder naßchemisch — beispielsweise durch Behandeln mit starken Laugen — vorgenommen werden. Die Destrukturierung durch Calcinieren bietet neben einer hohen Raum/Zeit-Ausbeute den zusätzlichen Vorteil, daß dabei die bereits erwähnten organischen Verunreinigungen verbrannt werden.

Auf diese Weise läßt sich Kaolin technisch sowohl diskontinuierlich als auch kontinuierlich zu Metakaolin destrukturieren. Die Umwandlung dieses Metakaolins in feinstteilige zeolithische Alkalialuminiumsilikate kann in technischem Maßstab beispielsweise diskontinuierlich erfolgen. Die Verfahrensweise eines derartigen diskontinuierlichen Zeolithisierungsprozesses ist beispielsweise bei Donald W. Breck, « Zeolite Molecular Sieves », John Wiley & Sons, New York, 1974, Seiten 725 bis 742, beschrieben. Weitere Verfahren zur Herstellung von Zeolith A aus Kaolin werden beispielsweise in den deutschen Offenlegungsschriften (DE-A) 27 15 934, 27 22 564, 27 25 496, 27 43 597, 28 23 927 und 28 52 674 beschrieben ; hierbei handelt es sich jedoch gleichfalls um diskontinuierliche Verfahren.

Die DD-A-132 069 beschreibt ein kontinuierliches Verfahren zur Herstellung von kristallinen, teilweise kristallinen oder amorphen Alumosilikaten, beispielsweise von kristallinen Alumosilikaten des Typs Zeolith A. Hierbei werden die Ausgangsstoffe, z. B. Metakaolin und Natriumhydroxid, in wäßriger Lösung oder Suspension kontinuierlich einem Reaktor zugeführt, in welchem durch hydrothermale Synthese die gewünschten Endprodukte in hohen Raum/Zeit-Ausbeuten entstehen. Als Reaktor wird ein temperierbarer Mehrkammerdurchflußreaktor, bestehend aus 2 bis 20, vorzugsweise 5 bis 10, untereinander angeordneten und miteinander verbundenen Kammern mit Rühreinrichtung und mit innerer und/oder äußerer, zwangsweiser, partieller Rückführung des Produktstromes, verwendet. Bei der Herstellung kristalliner Alumosilikate, z. B. des Typs Zeolith A, soll die Verweilzeit im Reaktor 60 bis 300 Minuten bei einer Reaktionstemperatur von 80 °C betragen. Gemäß einem Beispiel resultiert hiernach durch Umsetzung von Metakaolin mit Natronlauge — bei einem molaren Verhältnis von $2\ Na_2O : 1\ Al_2O_3 : 2\ SiO_2 : 100\ H_2O$ — ein Produkt mit einem CaO-Bindevermögen von 50 mg CaO/g Aktivsubstanz.

Demgegenüber ist es die Aufgabe der vorliegenden Erfindung, ein Verfahren zur Umwandlung von Metakaolin in feinstteiliges, wasserhaltiges zeolithisches Natriumaluminiumsilikat vom Typ NaA zu entwickeln, das einerseits einen kontinuierlichen Verfahrensablauf mit einer hohen Raum/Zeit-Ausbeute ermöglicht und andererseits zu möglichst gritarmen Produkten mit einem hohen Kationenaustauschvermögen führt.

Gegenstand der Erfindung ist demnach ein Verfahren zur kontinuierlichen Umwandlung von Metakaolin in feinstteiliges, gritarmes, wasserhaltiges zeolithisches Natriumaluminiumsilikat der Zusammensetzung :

$$0{,}9 \text{ bis } 1{,}1\ Na_2O : 1\ Al_2O_3 : 1{,}8 \text{ bis } 2{,}3\ SiO_2,$$

welches zu mindestens 99,8 Gewichtsprozent eine Teilchengröße von kleiner als 25 μm sowie ein hohes Kationenaustauschvermögen aufweist und in Form einer wäßrig alkalischen Suspension anfällt,

a) durch Umsetzen von Metakaolin mit Natriumhydroxid bei Temperaturen im Bereich von 70 bis 100 °C in einem mehrstufigen Durchflußreaktor,

b) in einer wäßrig alkalischen Suspension, die eine Zusammensetzung entsprechend Molverhältnissen von

$$1{,}5 \text{ bis } 5\ Na_2O : 1\ Al_2O_3 : 1{,}8 \text{ bis } 2{,}3\ SiO_2 : 40 \text{ bis } 200\ H_2O$$

aufweist und durch Vermischen von Metakaolin mit wäßriger Natronlauge gewonnen wird, welches dadurch gekennzeichnet ist, daß man

c) die Suspension langsam auf die Zeolithisierungs-Temperatur im Bereich von 70 bis 100 °C aufheizt, bei einer Temperatursteigerung von im Mittel 20 °C innerhalb von 2 bis 10 Minuten,

d) die Suspension kontinuierlich einen stufig wirkenden und/oder stufig ausgeführten Reaktor mit

mindestens 7 Stufen durchströmen läßt, in welchem eine verringerte Vermischung der Volumenelemente in Strömungsrichtung eine verringerte Wechselwirkung von Natriumaluminiumsilikat-Teilchen unterschiedlichen Zeolithisierungsgrades beziehungsweise unterschiedlicher Kristallinität bedingt und wobei in den jeweiligen Stufen zur Vermeidung einer Sedimentation die Suspension hinreichend durchmischt werden muß,

e) die Suspension bei einer Temperatur von 70 bis 100 °C solange im Reaktor hält, bis der röntgenographisch ermittelbare Kristallisationsgrad des gebildeten zeolithischen Natriumaluminiumsilikats mindestens 80 % der theoretisch erzielbaren Kristallinität erreicht hat, und anschließend

f) die gewonnene Suspension des kristallinen zeolithischen Natriumaluminiumsilikats am dem Eingangsteil entgegengesetzten Ende des Reaktors ausströmen läßt.

Im Sinne des erfindungsgemäßen Verfahrens ist es mithin von wesentlicher Bedeutung, daß die zu zeolithisierende Suspension kontinuierlich einen Zeolithisierungsreaktor durchströmt, der mindestens 7 Stufen aufweist. Hierbei ist es ohne Belang, ob der Reaktor stufig ausgeführt ist — das heißt diskrete Stufen aufweist — und/oder nur stufig wirkt, da die Stufenzahl des Reaktors im Prinzip mit der einer in bezug auf die Verweilzeitverteilung äquivalenten Rührkesselkaskade gleichzusetzen ist. Im Hinblick auf die Abhängigkeit des Verweilzeitverhaltens vom sogenannten Stufenwirkungsgrad des verwendeten Reaktors sowie auf Zusammenhänge zwischen praktischer und theoretischer Stufenzahl mehrstufiger Reaktoren wird auf entsprechende Lehrbücher der technischen Chemie verwiesen, beispielsweise « Ullmanns Encyklopädie der technischen Chemie », 4. Auflage, Band 3 ; « Verfahrenstechnik II und Reaktionsapparate », 1973, Verlag Chemie, Seiten 342 und 354.

Generell läßt sich die Stufenzahl eines kontinuierlich zu betreibenden Reaktors als ein Maß dafür ansehen, in welchem Umfang Produktanteile bezüglich der Produkthauptfront vorauseilen beziehungsweise zurückströmen, mithin also als ein Maß für die Vermischung in Strömungsrichtung. Je höher die Stufenzahl des Reaktors, umso geringer ist das Ausmaß der Vermischung zwischen den einzelnen Volumenelementen der zu zeolithisierenden Suspension in Strömungsrichtung. Bei dem erfindungsgemäßen Verfahren kristallisiert die Suspension in Strömungsrichtung ; im Eingangsteil des Reaktors wird die alkalische Suspension des Metakaolins kontinuierlich eingespeist, am Ausgangsteil strömt die Suspension des kristallisierten Natriumaluminiumsilikates kontinuierlich aus. Eine verringerte Vermischung der Volumenelemente in Strömungsrichtung bedingt mithin eine verringerte Wechselwirkung von Natriumaluminiumsilikat-Teilchen unterschiedlichen Zeolithisierungsgrades beziehungsweise unterschiedlicher Kristallinität.

Überraschenderweise wurde nun festgestellt, daß es im Sinne des erfindungsgemäßen Verfahrens von wesentlicher Bedeutung ist, die Rückvermischung von bereits kristallisiertem Produkt mit Metakaolin weitgehend zurückzudrängen beziehungsweise die Wechselwirkung von Natriumaluminiumsilikat-Teilchen unterschiedlichen Zeolithisierungsgrades möglichst zu unterbinden.

Erfindungsgemäß wird eine wäßrig alkalische Metakaolin-Suspension, die eine Zusammensetzung entsprechend Molverhältnissen von

$$1{,}5 \text{ bis } 5\ Na_2O : 1\ Al_2O_3 : 1{,}8 \text{ bis } 2{,}3\ SiO_2 : 40 \text{ bis } 200\ H_2O$$

aufweist, zeolithisiert. Die Herstellung einer solchen Metakaolin-Suspension — durch Vermischen von Metakaolin mit wäßriger Natronlauge in einer zur Erzielung des vorstehend angegebenen Molverhältnisses erforderliche Konzentration — kann auf unterschiedliche Weise erfolgen. So läßt sich beispielsweise das bei der kontinuierlichen Calcinierung von Kaolin anfallende heiße Metakaolin unmittelbar mit einem kontinuierlichen Strom verdünnter Natronlauge vermischen. Andererseits kann aber auch bereits vorher destrukturiertes Metakaolin, das nach erfolgter Calcinierung durch Zwischenlagerung wieder abgekühlt ist, erfindungsgemäß eingesetzt werden. In diesem Falle ist es zweckmäßig, verdünnte wäßrige Natronlauge — vorzugsweise gebildet aus technischer Natronlauge, entionisiertem Wasser und/oder rückgeführter Mutterlauge einschließlich eingeengter Waschwässer aus vorangegangenen Metakaolin-Umsetzungen — in einem kontinuierlichen Strom vorzulegen und Metakaolin in denselben gleichfalls kontinuierlich einzutragen. Das Vermischen erfolgt erfindungsgemäß mit Vorteil in einer gesonderten, dem Zeolithisierungsreaktor vorgeschalteten Mischstrecke, die mit geeigneten Rühreinrichtungen versehen ist.

Im Sinne der Erfindung ist es von wesentlicher Bedeutung, daß man die gebildete Metakaolin-Suspension langsam auf die erforderliche Zeolithisierungstemperatur im Bereich von 70 bis 100 °C aufheizt. « Langsam » ist hierbei so zu verstehen, daß man eine Temperatursteigerung der Suspension von im Mittel 20 °C innerhalb von 2 bis 10 Minuten vornimmt. Auf diese Weise läßt sich einerseits die bei der Umsetzung von Metakaolin mit Natronlauge gegebenenfalls auftretende Dickstufe — das heißt ein Ansteigen der Viskosität — verringern sowie andererseits ein erhöhter Kristallisationsgrad des gebildeten Zeoliths erzielen. Ein erhöhter Kristallisationsgrad bewirkt wiederum insbesondere ein erhöhtes Kationenaustauschvermögen des Zeoliths, das erfindungsgemäß angestrebt wird.

Das Aufheizen der Suspension kann sowohl indirekt als auch durch Einblasen von Wasserdampf in die Suspension erfolgen. Im Interesse der kontinuierlichen Verfahrensweise ist es erfindungsgemäß bevorzugt, daß man das Aufheizen der Suspension auf die gewünschte Zeolithisierungstemperatur innerhalb des Zeolithisierungsreaktors vornimmt. Hierbei wird das Aufheizen im Eingangsteil des

Reaktors vorgenommen, an den sich der erfindungsgemäß erforderliche und wesentliche Teil des Reaktors, der mindestens 7 Stufen umfaßt, anschließt.

Im Sinne des erfindungsgemäßen Verfahrens wird die Metakaolin-Suspension bei einer Zeolithisierungstemperatur von 70 bis 100 °C so lange im Strömungszustand im Reaktor gehalten, bis der röntgenografisch ermittelbare Kristallisationsgrad des gebildeten zeolithischen Natriumaluminiumsilikats mindestens 80 % der theoretisch erzielbaren Kristallinität erreicht hat. Hierbei soll zweckmäßigerweise im gesamten Reaktor die Metakaolin-Suspension hinreichend durchmischt werden, um einer Sedimentation derselben vorzubeugen. Bei stufig ausgeführten Reaktoren läßt sich dies beispielsweise durch geeignete Rührwerke, die in den einzelnen Stufen des Reaktors angeordnet sind, erreichen.

Der Zeolithisierungsreaktor kann ferner ganz oder teilweise mit einem Heizmantel für Wasserdampf, Heißwasser oder andere gebräuchliche Wärmeübertragungsmedien umgeben sein. Auf diese Weise läßt sich die kontinuierliche Zeolithisierung weitgehend isotherm, das heißt mit einer Toleranz von ± 2 °C, durchführen. Im Interesse der bei dieser kontinuierlichen Verfahrensführung erzielbaren hohen Raum/Zeit-Ausbeute ist es erfindungsgemäß besonders bevorzugt, daß man die Suspension mit einem Durchsatz im Bereich von 1 bis 3, vorzugsweise 1 bis 2, $m^3$ Suspension pro $m^3$ Reaktorvolumen und Stunde den Reaktor durchströmen läßt.

Hinsichtlich der Wahl einer optimalen Zeolithisierungstemperatur ist ferner die Zusammensetzung der wäßrig alkalischen Metakaolin-Suspension von Bedeutung, wobei insbesondere dem Wassergehalt eine bestimmende Rolle zukommt. Bei höherem Wassergehalt der Suspension sind höhere, bei niedrigerem Wassergehalt geringere Zeolithisierungstemperaturen von Vorteil. In diesem Sinne ist es erfindungsgemäß bevorzugt, daß man eine Suspension der Zusammensetzung

$$2 \text{ bis } 3\ Na_2O : 1\ Al_2O_3 : 1{,}8 \text{ bis } 2{,}2\ SiO_2 : 40 \text{ bis } 80\ H_2O$$

bei einer Temperatur im Bereich von 75 bis 95 °C der Umsetzung unterwirft. Auf diese Weise läßt sich insbesondere die Bildung nicht-kationenaustauschender, meist feldspatoider Nebenprodukte weitgehend zurückdrängen.

Als Zeolithisierungsreaktoren im Sinne der Erfindung können generell solche Reaktoren Verwendung finden, die ein kontinuierliches Einführen der Metakaolin-Suspension sowie ein kontinuierliches Ableiten der Kristallisat-Suspension ermöglichen und die erforderliche Stufenzahl aufweisen. Derartige Reaktoren sind an sich bekannt und in Lehrbüchern der technischen Chemie beschrieben, beispielsweise in dem vorstehend zitierten « Ullmann »-Band.

Das Gesamtvolumen des zu verwendenden Zeolithisierungsreaktors und damit auch seine Abmessungen werden vom angestrebten Mengendurchsatz der Metakaolin-Suspension bestimmt.

Zur Durchführung des erfindungsgemäßen Verfahrens werden als Zeolithisierungsreaktoren vorzugsweise Rührkesselkaskaden, Rührkolonnen oder Rohrreaktoren verwendet.

Nach einer bevorzugten Ausführungsform des erfindungsgemäßen Verfahrens nimmt man die Umsetzung in durch Rohrleitungen miteinander verbundenen, mit Rührvorrichtungen versehenen Kesseln einer Rührkesselkaskade vor, die mindestens 7 Kessel umfaßt. Als stufig ausgeführter Reaktor im Sinne der Erfindung findet mithin eine Rührkesselkaskade Verwendung, wobei die einzelnen Kessel der Kaskade die jeweiligen Stufen des Reaktors darstellen.

Die Rührkesselkaskade ist eine Serienschaltung von kontinuierlich betriebenen Idealkesseln. Die Reaktionspartner beziehungsweise deren Gemisch werden laufend in den ersten Kessel eingespeist und das Endgemisch, welches die Reaktionsprodukte enthält, wird kontinuierlich aus dem letzten Kessel abgezogen. Dabei stellt der Produktstrom des vorangehenden Rührkessels den Zulaufstrom für den folgenden Kessel dar. Für jeden einzelnen Rührkessel gilt dann die Charakteristik des Idealkessels als eines homogenen und stationären Reaktors. Für die Gesamtheit der Rührkesselkaskade ergibt sich ein treppenförmiger Konzentrationsverlauf der Reaktionsteilnehmer. Angaben zum Aufbau und Betreiben von Idealkesseln und Rührkesselkaskaden einschließlich deren mathematischer Behandlung lassen sich Lehrbüchern der technischen Chemie entnehmen, beispielsweise der vorstehend zitierten Literaturstelle « Ullmanns Encyklopädie der technischen Chemie ».

Das wichtigste Merkmal des idealen Rührkessels ist die Vermischung. Die rechnerische Beschreibung des idealen Rührkessels beruht in erster Linie auf der Annahme vollständiger Vermischung des Kesselinhaltes, daß also das Reaktionsgemisch am Kesselausgang und im Rührkessel selbst dieselbe Zusammensetzung aufweist. Zur geforderten vollständigen Vermischung der Reaktionspartner im idealen Rührkessel ist eine gute Rührung Voraussetzung ; andernfalls könnte ein Teil der Reaktionsflüssigkeit direkt vom Kesseleingang zum Kesselausgang strömen, und ein großer Teil des Kesselinhalts wäre lediglich Totvolumen.

Für den realen Fall trifft die Voraussetzung idealer Durchmischung nur näherungsweise zu. Die Mischzeit, in welcher der Inhalt eines Rührkessels homogen durchmischt ist, läßt sich für verschiedene Bedingungen berechnen. Ideale Durchmischung liegt praktisch dann vor, wenn die mittlere Verweilzeit in dem Rührkessel wesentlich größer ist als die Mischzeit. Erfahrungsgemäß wird ein ideales Verhalten ausreichend angenähert, wenn die mittlere Verweilzeit etwa 5 bis 10 mal so groß ist wie die berechnete Mischzeit.

Bei der Auslegung der Rührkesselkaskaden spielen Maßstabsfragen keine Rolle, wenn ideales

Strömungsverhalten wie oben beschrieben vorliegt. Die in dieser Hinsicht wesentliche Rechengröße ist die mittlere Verweilzeit, durch welche Reaktoren beliebiger Größe beschrieben werden. Für den realen Fall ist jedoch bei Maßstabsänderungen zu beachten, daß von der Größe des Kessels sowohl die Mischzeit als auch das Verhältnis von Oberfläche zu Volumen des Kessels abhängen. Dieses Verhältnis hat entscheidenden Einfluß auf den Wärmezu- und -abfluß, da die durch die Kesselwand zu transportierende Wärmemenge der Kesseloberfläche proportional ist, die Reaktionswärme jedoch dem genutzten Kesselvolumen. Bei der Auslegung von Rührkesselkaskaden ist also jeweils zu prüfen, ob die Mischzeit wie oben gefordert jeweils sehr klein ist gegenüber der mittleren Verweilzeit.

Die Optimierung einer Rührkesselkaskade ist nach verschiedenen Gesichtspunkten möglich. Aus verfahrenstechnischer Sicht ist meist von Bedeutung, in welchem Verhältnis die Volumina der einzelnen Kessel zueinander stehen müssen, damit entweder die Kaskade bei gegebenem Umsatz das kleinste Gesamtvolumen hat beziehungsweise damit in einer Kaskade von gegebenem Gesamtvolumen der größte Umsatz erreicht wird. Für die meisten chemischen Reaktionen müssen im Hinblick auf die zugehörigen Geschwindigkeitsgesetze alle Rührkessel das gleiche Volumen haben. Aus Gründen der Standardisierung werden für Reaktionen beliebiger Ordnung Rührkesselkaskaden mit einheitlichen Kesseln bevorzugt. Weitere Optimierungsmöglichkeiten ergeben sich aus Wirtschaftlichkeitserwägungen und aus Überlegungen zur optimalen Reaktionsführung.

Nach einer weiteren bevorzugten Ausführungsform des erfindungsgemäßen Verfahrens nimmt man die Umsetzung in einer vorzugsweise vertikal angeordneten Rührkolonne vor, die durch geeignete Zwischenböden in mindestens 7 Kammern unterteilt ist. Als stufig ausgeführter Reaktor im Sinne der Erfindung findet mithin eine Rührkolonne Verwendung, wobei durch die eingebauten Zwischenböden die jeweiligen Stufen des Reaktors gebildet werden.

Rührkolonnen bestehen aus einem zylindrischen Reaktor, der durch Zwischenwände in Kammern bevorzugt gleicher Große unterteilt ist. Dieser Reaktortyp wird daher in der Literatur gelegentlich auch als « Kammerreaktor » bezeichnet. Analog zu Destillationskolonnen werden bei Rührkolonnen die Zwischenwände auch « Böden » genannt. Gleichermaßen analog ist auch die Stufenzahl definiert als Produkt von (praktischer) Bodenzahl und Stufenwirkungsgrad (siehe Lehrbücher der technischen Chemie). Der Abstand der Böden, also die Höhe der Kammern, liegt bei technisch gängigen Rührkolonnen hoher Bodenzahl im Bereich des 0,35- bis 0,5 fachen des Reaktordurchmessers.

Die Rührer für die einzelnen Kammern sind gemeinsam auf einer Welle in der Rohrachse befestigt. Die Lager befinden sich normalerweise an den Enden ; nur bei besonders langen Rührerwellen ist eine Zwischenlagerung technisch sinnvoll. Die Auslegung der Rührer bezüglich Rührertyp, Rührergröße, Leistungsbedarf, Strombrecher und dergleichen kann sehr unterschiedlich sein. Die Berechnung der mittleren Verweilzeit, Verweilzeitverteilung und Konzentration der Reaktanden in einer Rührkolonne ist identisch mit derjenigen für eine Rührkesselkaskade gleicher Stufenzahl ; mit einer Rührkolonne lassen sich jedoch mit geringerem wirtschaftlichen Aufwand höhere Stufenzahlen realisieren. Die Flüssigkeit tritt in Rührkolonnen von Kammer zu Kammer durch Aussparungen in den Böden über. Rührkolonnen können mit beliebiger Orientierung im Raum, also stehend, waagerecht oder schräg liegend betrieben werden. Bevorzugt werden sie jedoch stehend, geflutet mit von unten nach oben steigender Flüssigkeit gefahren. Einzelheiten und besondere Ausführungsformen sind Lehrbüchern der technischen Chemie zu entnehmen, beispielsweise der vorstehend zitierten Literaturstelle « Ullmanns Encyklopädie der technischen Chemie ».

Erfindungsgemäß wird die Metakaolin-Suspension kontinuierlich in die unterste Kammer am Boden der senkrecht stehenden Kolonne mit Hilfe entsprechender Dosiereinrichtungen eingeführt. Die verwendete Rührkolonne sollte mindestens 6, vorzugsweise jedoch eine größere Anzahl von Zwischenböden aufweisen. Im Hinblick auf die — wie vorstehend erörtert — erwünschte mittlere Verweilzeit der Reaktionspartner in der Kolonne, kann die Rührerumfangsgeschwindigkeit auf unter 6 Meter pro Sekunde, gegebenenfalls sogar auf unter 4 Meter pro Sekunde je nach Rührertyp, beschränkt werden.

Nach einer dritten bevorzugten Ausführungsform des erfindungsgemäßen Verfahrens nimmt man die Umsetzung in einem Rohrreaktor vor, der ein Verhältnis von Rohrlänge zu Rohrdurchmesser im Bereich von 3 000 bis 7 000, vorzugsweise von 5 000, aufweist. Als stufig wirkender Reaktor im Sinne der Erfindung findet mithin ein Rohrreaktor Verwendung, wobei durch das vorstehend angeführte Verhältnis von Rohrlänge zu Rohrdurchmesser die erforderliche Stufigkeit des Reaktors erzielt wird.

Beim Rohrreaktor (oder auch « Strömungsrohr ») wird das Reaktionsvolumen von einem Rohr gebildet, dessen Länge in der Regel sehr groß ist im Vergleich zu seinem Durchmesser. Die Reaktanden treten an dem einen Ende des Rohres ein, das Endgemisch wird am anderen Ende ausgetragen. Für das ideale Strömungsrohr gilt, daß keine Vermischung zwischen den einzelnen Volumenelementen der Reaktionsmischung in Strömungsrichtung stattfindet und daß die Zusammensetzung der Reaktionsmischung an jeder Stelle des Rohres über den Querschnitt konstant ist. Man kann diese Bedingungen in erster Näherung durch die Annahme einer sogenannten Kolben- oder Pfropfenströmung beschreiben. Die Änderungen der Konzentration längs des Rohres sind abhängig von dem Durchsatz.

Ferner gilt für den Rohrreaktor, daß in jedem Querschnitt des Rohres in radialer Richtung eine möglichst vollkommene Vermischung resultiert. Auf diese Weise wird im Sinne der Erfindung die zur Vermeidung einer Sedimentation erforderliche Durchmischung der Suspension erreicht.

Die Verweilzeitverteilung eines realen Strömungsrohres unterscheidet sich von derjenigen eines

idealen und ist abhängig von REYNOLDS-Zahl, Rohrkrümmungen, Rohrprofil, Rohreinbauten, Wandrauhigkeiten, Strömungsverhältnissen am Eingang und Ausgang des Rohres, Zähigkeitsunterschieden des Reaktionsgemisches und ähnlichen Parametern. Kenntnisse über die Verweilzeitverteilung in einem gegebenen Rohrreaktor kann man sich entweder durch Messung verschaffen oder indem man die Betriebsbedingungen so wählt, daß sie weitgehend ideal sind.

Angaben zum Aufbau und Betreiben von Rohrreaktoren einschließlich deren mathematischer Behandlung lassen sich Lehrbüchern der technischen Chemie entnehmen, beispielsweise dem vorstehend zitierten « Ullmann »-Band.

Bei Durchführung des erfindungsgemäßen Verfahrens resultiert nach vollendeter Zeolithisierung eine wäßrig alkalische Suspension feinstteiliger, kristalliner zeolithischer Natriumaluminiumsilikate vom Typ NaA, die sich einerseits durch einen Gritanteil von weniger als 0,2 Gewichtsprozent und ein engbandiges Kornspektrum mit einer nur geringen Korngröße sowie andererseits durch hohes Kationenaustauschvermögen auszeichnen.

Die erfindungsgemäß hergestellte Suspension des kristallinen Zeoliths wird in der Regel weiter aufbereitet. Hierzu wird beispielsweise der kristalline Feststoff abfiltriert, gewaschen und getrocknet oder je nach dem angestrebten Verwendungszweck in sonstiger gebräuchlicher Weise konfektioniert. So kann gegebenenfalls auch eine wäßrige Suspension des kristallinen Natriumaluminiumsilikats zur Herstellung von Wasch- und Reinigungsmitteln Verwendung finden. Mutterlauge und Waschwässer werden mit Vorteil in den Herstellungsprozeß zurückgeführt.

Aufgrund des hohen Kationenaustauschvermögens des gewonnenen zeolithischen Natriumaluminiumsilikats, das in einem Calciumbindevermögen im Bereich von 150 bis 170 mg CaO/g Zeolith zum Ausdruck kommt, wird dieses vorzugsweise als heterogener anorganischer Builderstoff (Phosphatersatz) in Wasch-, Spül- und Reinigungsmitteln eingesetzt.

Die zur Umwandlung in zeolithische Natriumaluminiumsilikate verwendeten kaolinischen Aluminiumsilikate weisen stets einen Gehalt an Verunreinigungen, wie CaO, MgO, $TiO_2$, $Fe_2O_3$ und ähnlichen Metalloxiden, auf. Von diesen Verunreinigungen macht sich bei der späteren Verwendung des gewonnen Zeoliths vor allem Eisenoxid negativ bemerkbar, beispielsweise beim Einsatz des Zeoliths als Katalysator bei chemischen Prozeßen. Stark eisenhaltige Zeolithe können sich ferner beispielsweise bei ihrer Verwendung in Waschmitteln destabilisierend auf gleichfalls anwesende Perverbindungen auswirken. Sind somit aus anwendungstechnischen Gründen besonders eisenarme Zeolithisierungsprodukte erwünscht, lassen sich verschiedene Maßnahmen zur Verringerung des Eisengehaltes ergreifen.

Einerseits werden dann von vornherein eisenarme Kaoline — Eisengehalt unterhalb 0,5 Gewichtsprozent $Fe_2O_3$ bezogen auf wasserfreien Kaolin — eingesetzt. Technisch möglich ist auch die Abtrennung eisenhaltiger Begleitminerale vom Kaolin durch Einsatz von Magnetabscheidern. Eine Verringung des Eisengehaltes im Kaolin beziehungsweise eine damit gleichlaufende Erhöhung des Weißgrades läßt sich auch durch gleichzeitige Einwirkung von Reduktionsmitteln und organischen Austauscherharzen in saurer Suspension erreichen. Nahezu eisenfreies Metakaolin wird gewonnen, wenn während des Calcinierens chlorierende Gase, beispielsweise Chlorwasserstoff oder Phosgen, auf das Kaolin einwirken. Hierbei wird das Eisen in Eisen (III)-chlorid umgewandelt und ausgetrieben. Derartige Metakaolin-Qualitäten mit erniedrigtem Eisengehalt lassen sich für das erfindungsgemäße Verfahren uneingeschränkt verwenden.

Andererseits kann beim erfindungsgemäßen Verfahren auch eine deutliche Verringerung des Resteisengehaltes des resultierenden Zeoliths erzielt werden, indem man der Metakaolin-Suspension Trialkanolamin zugibt und dieses während der Zeolithisierung analog den Angaben in der DE-A-26 35 357 einwirken läßt.

In den nachfolgenden Beispielen wird die Durchführung des erfindungsgemäßen Verfahrens näher erläutert.

## Beispiele

In den nachstehenden Beispielen wurden als stufig wirkende Mischstrecke sowohl eine Rührkesselkaskade (Beispiele 1a bis 1d), eine Rührkolonne (Beispiele 2a bis 2f) als auch ein Rohrreaktor (Beispiel 3) verwendet. Angaben, die für alle Beispiele gleichermaßen gelten, sind nachstehend zusammenfassend wiedergegeben.

Als Kaolin wurde in den Beispielen ausschließlich die Qualität Bolus alba mit einem Molverhältnis $SiO_2 : Al_2O_3 = 2,03$ und einem Wassergehalt von 13,1 % eingesetzt. Als Nebenbestandteile dieses Kaolins wurden röntgenfluoreszenzanalytisch bestimmt (Angaben als Oxide) :

0,07 % $Na_2O$ ; 1,01 % $K_2O$ ; 0,56 % $Fe_2O_3$ ; 0,09 % $TiO_2$ ; 0,2 % CaO und 0,2 % MgO.

Die Destrukturierung dieses Kaolins wurde durch kontinuierliche Calcinierung mittels eines Drehrohrofens (Rohrlänge 1,8 m, davon 1,1 m beheizt, Innendurchmesser 83 mm) bei elektrischer Außenbeheizung und Temperaturen im Bereich von 850 bis 900 °C vorgenommen. Bei einem Neigungswinkel des Drehrohres von 4° und einer Drehzahl von 12 Umdrehungen pro Minute betrug die mittlere Verweilzeit des Kaolins im Drehrohr nur etwa 5 Minuten. Dieses calcinierte Material wurde in den Beispielen als

Metakaolin verwendet.

Bei allen Patentbeispielen bestand der Versuchsablauf aus einer Mischstufe, der Aufheizstufe sowie dem eigentlichen Zeolithisierungsreaktor.

Als Mischreaktor wurde in allen Fällen ein offener 100-1-Behälter verwendet. In diesen wurden kontinuierlich 50 %ige technische Natronlauge und entionisiertes Wasser zugepumpt, Metakaolin über eine Schüttelrinne zudosiert.

Pro Zeiteinheit wurden diese Reaktionspartner kontinuierlich und gleichmäßig in solchen Mengen in den Mischreaktor eingebracht, daß die in den Beispielen angegebenen Ansatzverhältnisse und Durchsatzmengen resultierten. Mit der eigentlichen Zeolithisierung, das heißt Einleitung von Metakaolin-Suspension in den Zeolithisierungsreaktor, wurde stets erst nach Vorliegen von etwa 100 l Suspension begonnen ; kleine Dosier- und Temperaturschwankungen wurden dadurch ausgeglichen. Die Suspension wurde fortwährend mit einem Ekato-Rührer mit Zahnscheibenrührwelle (18 cm Scheibendurchmesser, Drehzahl 500 Umdrehungen pro Minute) gerührt.

Aus dieser Vorlage wurde mittels einer Kolbendosierpumpe die Suspension in die Aufheizstufe gepumpt. Die Aufheizstufe war jeweils in den Zeolithisierungs-Reaktor integriert. Die Aufheizung auf die angegebene Zeolithisierungstemperatur wurde stets mittels gesättigtem feinverteiltem Wasserdampf vorgenommen. Die dadurch zusätzlich in die Suspension eingebrachte Wassermenge betrug in allen Beispielen etwa 4 Mol $H_2O$ pro Mol $Al_2O_3$.

Jeweils nach etwa eineinhalbstündiger Versuchsdauer wurden aus dem kontinuierlichen Produktstrom Proben von etwa 1 l Suspension abgenommen. Der Feststoff wurde über Filternutschen abfiltriert und mit 60 °C heißem entionisiertem Wasser so lange gewaschen, bis das Waschwasser nur noch eine Restalkalität entsprechend pH 9 aufwies.

Zur Charakterisierung wurden die gewaschenen Produkte über Nacht im Vakuumtrockenschrank bei 100 °C getrocknet und gut verrieben. Die Substanzen wurden zunächst mittels ihres Röntgendiagrammes identifiziert. Die Zusammensetzung bezüglich $Na_2O$, $SiO_2$ und $Al_2O_3$ wurde röntgenfluoreszenzanalytisch bestimmt. Als Wassergehalt ist der Glühverlust nach einer Stunde bei 800 °C angegeben. Der Kristallhabitus wurde rasterelektronenmikroskopisch bestimmt, die Korngrößenverteilung mittels Coulter-Counter$^R$ gemessen, der Naßsiebrückstand nach MOCKER unter Verwendung eines 25 µm-Siebes gemäß DIN 53 580 (1 g Aktivsubstanz in 100 ml entionisiertem Wasser aufgeschlämmt, 1 Minute im Ultraschallbad homogenisiert, 5 Minuten Naßsiebung mit Wasserdruck von 4 bar und einer Strömungsgeschwindigkeit von 400 l Wasser pro Stunde ; Rückwägung der bei 110 °C im Trockenschrank getrockneten Siebe) ermittelt.

Bei der modifizierten Bestimmung des Grit-Gehaltes wurde entsprechend ein Prüfsieb mit einer Maschenweite von 50 µm (DIN 4188) verwendet. Die mit Wasser aufgeschlämmte Produktprobe wurde hier mit Hilfe von aus rotierenden Düsen versprühtem Wasser aufgewirbelt. Die Feinanteile der zu prüfenden Probe wurden auf diese Weise drucklos durch das Prüfsieb gespült. Die Naßsiebung wurde nach 2 Minuten Dauer bei einer versprühten Wassermenge von 80 l pro Stunde abgebrochen und der Siebrückstand wie angegeben bestimmt.

Als Maß für das Kationenaustauschvermögen des kristallinen zeolithischen Materials wird das Calciumbindevermögen von 1 g Natriumaluminiumsilikat (Aktivsubstanz = AS) pro Liter bei einer Ausgangshärte von 30 °d (Deutsche Härte) herangezogen. Zur Bestimmung des Calciumbindevermögens wurde 1 l einer wäßriger, 0,594 g $CaCl_2$ (entsprechend 300 mg CaO/l = 30 °d) enthaltenden Lösung mit verdünnter Natronlauge auf einen pH-Wert von 10 eingestellt und mit 1 g AS versetzt. Die gebildete Suspension wurde anschließend für die Dauer von 15 Minuten bei einer Temperatur von 22 ± 2 °C kräftig gerührt. Nach Abfiltrieren des Natriumaluminiumsilikats wurde die Resthärte X im Filtrat durch komplexometrische Titration mittels Ethylendiamintetraessigsäure ermittelt. Das Calciumbindevermögen in mg CaO/g AS errechnet sich hieraus nach der Formel : $(30 - X) \cdot 10$.

Die Durchführung der Beispiele ist im folgenden beschrieben. Die Eigenschaften der aus diesen Beispielen erhaltenen Produkte lassen sich Tabelle 1 entnehmen.

Da in allen Beispielen die gleiche Metakaolin-Qualität verwendet wurde, war auch die chemische Zusammensetzung der resultierenden Produkte bezogen auf die Hauptbestandteile bemerkenswert konstant. Die Produkte wiesen alle eine Zusammensetzung entsprechend Molverhältnissen 0,97 bis 1,04 $Na_2O \cdot Al_2O_3 \cdot 2{,}15$ bis 2,25 $SiO_2$ mit einem vom Trocknungsgrad abhängigen Wassergehalt gemäß Tabelle 1 auf. Der Eisengehalt bezüglich der wasserfreien Produkte lag in den Grenzen 0,35 bis 0,43 % $Fe_2O_3$ außer bei Produkt aus triethanolaminhaltiger Suspension gemäß Beispiel 2f mit 0,11 % $Fe_2O_3$ bezüglich Aktivsubstanz. Die rasterelektronenmikroskopischen Aufnahmen zeigten stets gut ausgeprägte Kristallite mit Kantenlängen zwischen 0,5 und 2,0 µm bei einem Verteilungsmaximum von etwa 1 µm.

Alle Produkte erbrachten die für Zeolith des Typs NaA charakteristische Lage und relative Intensität der Röntgenreflexe. Kristalline Verunreinigungen in nennenswerter Menge lassen sich aufgrund dieser Röntgendifraktogramme ausschließen. Die rasterelektronenmikroskopischen Aufnahmen zeigten stets gut ausgeprägte Kristallite mit der für Zeolith NaA typischen Gestalt.

## Beispiele 1a bis 1d

Zur Durchführung der nachstehenden Beispiele wurde eine Rührkesselkaskade mit 10 Rührkesseln,

deren Anordnung in Abbildung 1 vereinfacht wiedergegeben ist, verwendet.

Die Rührkessel 1 bis 10 waren mit Mantelheizung und gleichen Rührsystemen ausgestattet, wiesen gleiche Gestalt und Größe (30 cm Durchmesser, Höhe etwa 60 cm) auf und hatten ein nutzbares Reaktorvolumen (bis Überlauf) von jeweils etwa 40 l. Für die Durchmischung des Reaktionsgemisches in den Kesseln 1 bis 10 wurden standardisierte Rührer 11 mit Strombrechern mit einer konstanten Umfangsgeschwindigkeit von 5 Metern pro Sekunde verwendet.

In den Beispielen 1a und 1b wurden der Mischstufe kontinuierlich und gleichmäßig pro Stunde 272,7 kg technische Natronlauge, 136,3 kg Metakaolin sowie 409 l entionisiertes Wasser zugeführt. Daraus resultierten Molverhältnisse im Ansatz von 2,8 $Na_2O : Al_2O_3 : 2{,}03\ SiO_2 : 53\ H_2O$. Etwa 10 Minuten nach Beginn der Befüllung der Mischstufe wurde aus der bereits angesammelten Suspension kontinuierlich eine Menge von 600 l pro Stunde entsprechend 818 kg pro Stunde in den Kessel 1 der Kaskade gepumpt.

Bei den Beispielen 1c und 1d wurden entsprechend pro Stunde 173,4 kg technische Natronlauge, 72,3 kg Metakaolin und 491,7 l entionisiertes Wasser zu resultierenden Molverhältnissen von 3,36 $Na_2O : 1\ Al_2O_3 : 2{,}03\ SiO_2 : 103\ H_2O$ vermischt. Hiervon wurden wiederum nach 10 Minuten Vorlaufzeit pro Stunde 600 l entsprechend 737,4 kg Suspension in den Kessel 1 der Kaskade gepumpt.

Die stufenweise Aufheizung der Kaolin-Suspension von der Vorlagetemperatur von etwa 25 bis 30 °C in der Mischstufe auf Zeolithisierungstemperatur erfolgte durch Einblasen von Wasserdampf in die Kessel 1, 2 und 3 zusätzlich zur Mantelheizung mit 90 °C. Die Wasserdampfzufuhr wurde so reguliert, daß unabhängig von der Dosierung in Kessel 1 eine Temperatur von 51 °C, in Kessel 2 von 69 °C und in Kessel 3 von 88 °C jeweils in den Grenzen ± 2 °C resultierten. Die stets am Abfluß der Rührkesselkaskade abgenommenen Kristallisat-Suspensionen wiesen Temperaturen von konstant 89 bis 90 °C auf. Die in Tabelle 1 aufgeführten Produkte entstammen solchen Suspensionen.

Für die eigentliche Zeolithisierung wurden in den Beispielen 1a bis 1d also nur die Kessel 4 bis 10 verwendet.

## Beispiele 2a bis 2f

Für die Beispiele 2a bis 2d wurde eine Rührkolonne mit einem nutzbaren Fassungsvermögen von etwa 200 l eingesetzt. Die Rührkolonne hatte eine Gesamtlänge von 3,7 m und wurde von unten nach oben betrieben. Durch 27 Zwischenböden wurden insgesamt 28 Kammern gebildet (siehe Abbildung 2) ; die Kammern 2 bis 12 im Eingangsteil waren 11 cm hoch, die Kammern 13 bis 27 dagegen 14 cm (jeweils Innenhöhe). Die Kammern 1 und 28 (Reaktoreingang beziehungsweise -ausgang) enthielten die Rührerlager und waren daher etwas größer ausgelegt (circa 15 cm hoch). Die Zwischenböden wiesen konzentrische Öffnungen mit einem Durchmesser von 0,5 × Kolonneninnendurchmesser auf ; die darüber im Abstand von circa 1 mm befindlichen Scheiben hatten jeweils einen Durchmesser von 0,7 × Kolonneninnendurchmesser (Kolonneninnendurchmesser 27 cm). Die Rührerwelle trug die Rührwerkzeuge für jede der Kammern (MIG-Rührer, Firma EKATO, Rührerdurchmesser = 0,7 × Kolonneninnendurchmesser). Die Rührerdrehzahl war am Rührmotor 29 stufenlos bis zu einer Rührerdrehzahl von 480 Umdrehungen pro Minute regelbar. Alle Kristallisationsbeispiele wurden jedoch bei einer konstanten Rührerdrehzahl von 312 Umdrehungen pro Minute ausgeführt. Die gesamte Kolonne wurde über einen Mantel mit Wasserdampf auf 95 ± 1 °C (im Beispiel 2e nur 85 ± 1 °C) beheizt (3 Zonen).

Die Kammern 1, 2, 3, 5 und 7 wiesen Stutzen 30 bis 34 zum Finblasen von Wasserdampf auf. Die Kammern 14 und 21 enthielten Vorrichtungen 35 und 36 zur Entnahme von Suspensionen aus dem Produktstrom.

Im Beispiel 2a wurden der Mischstufe kontinuierlich und gleichmäßig pro Stunde 111,4 kg technische Natronlauge, 55,7 kg Metakaolin und 222,9 kg entionisiertes Wasser zu resultierenden Gesamtmolverhältnissen von 2,8 $Na_2O : 1\ Al_2O_3 : 2{,}03\ SiO_2 : 65\ H_2O$ zugeführt. Etwa 20 Minuten nach Beginn der Befüllung wurde aus der bereits angesammelten Suspension kontinuierlich ein Strom von 300 l pro Stunde entsprechend etwa 390 kg pro Stunde in die Kammer 1 der Rührkolonne gepumpt. Die direkte Aufheizung der Suspension von etwa 40 °C Mischtemperatur durch Einblasen von Wasserdampf erfolgte stufenweise in Kammer 1 (Anstieg auf 60 ± 2 °C), Kammer 3 (Anstieg auf 70 ± 2 °C), Kammer 5 (Anstieg auf 80 ± 2 °C) und Kammer 7 (Anstieg auf 88 ± 2 °C). Die Temperatur am Rührkolonnenausgang betrug 92 ± 1 °C. Hier wurde Suspension mit Produkt 2a abgenommen.

Im Beispiel 2b wurden unter gleichbleibenden Molverhältnissen im Ansatz die Einsatzstoffe nur zu 2/3 der oben angegebenen Mengen dosiert. Etwa 30 Minuten nach Beginn der Befüllung der Mischstufe wurde aus der angesammelten Suspension ein Strom von 200 l pro Stunde entsprechend etwa 260 kg pro Stunde in die Kammer 1 der Rührkolonne geleitet. Die stufenweise Aufheizung der Suspension von Mischtemperatur (37 °C) erfolgte durch Einblasen von Wasserdampf in Kammer 1 (Anstieg auf 61 ± 2 °C), Kammer 2 (Anstieg auf 75 ± 2 °C) und Kammer 3 (Anstieg auf 92 ± 2 °C). Suspension mit Produkt 2b wurden an Kammer 21 mit einer Temperatur von 94 ± 1 °C abgenommen.

Im Beispiel 2c wurde wie im Beispiel 2b verfahren, das Produkt abweichend von Beispiel 2b jedoch erst am Rührkolonnenausgang abgenommen. Die Temperatur der Suspension betrug ebenfalls 94 ± 1 °C.

Im Beispiel 2d wurde die Dosierung analog dem Beispiel 2a vorgenommen. Entsprechend wurden auch pro Stunde 600 l Suspension gleich etwa 818 kg in die Kammer 1 der Rührkolonne geleitet. Die

Aufheizung erfolgte wie im Beispiel 2b. Produkt-Suspension mit einer Temperatur von 93 ± 1 °C wurde am Kolonnenausgang abgenommen.

Im Beispiel 2e wurden pro Stunde 140 kg technische Natronlauge, 87,5 kg Metakaolin und 262,5 kg entionisiertes Wasser zu resultierenden Gesamtmolverhältnissen von 2,24 $Na_2O$ : 1 $Al_2O_3$ : 2,03 $SiO_2$ : 40 $H_2O$ vermischt. Aus der Mischvorlage wurde nach 20 Minuten Vorlaufzeit pro Stunde 420 kg Suspension mit einer Temperatur von 43 °C in die Kammer 1 der Rührkolonne gepumpt und mit Wasserdampf stufenweise um jeweils etwa 14 °C in den Kammern 1, 2 und 3 auf eine Endtemperatur von 85 ± 1 °C aufgeheizt. Die indirekte Beheizung über die Kolonnen-Ummantelung wurde hierbei ebenfalls mit 85 ± 1 °C vorgenommen. Am Ausgang der Rührkolonne wurde Suspension mit einer Temperatur von 85 ± 1 °C entnommen und hieraus Produkt 2e gemäß Tabelle 1 aufgearbeitet.

Im Beispiel 2f wurde die Zeolithisierung in Gegenwart eines eisenkomplexierenden Zusatzstoffes durchgeführt. Pro Stunde wurden neben 136,4 kg technischer Natronlauge, 68,2 kg Metakaolin und 204,5 kg entionisiertem Wasser entsprechend resultierenden Gesamtmolverhältnissen von 2,8 $Na_2O$ : 1 $Al_2O_3$ : 2,03 $SiO_2$ : 53 $H_2O$ noch 3,4 kg Triethanolamin pro Stunde der Mischstufe zugeführt. Nach 20 Minuten Vorlaufzeit wurde aus der im Mischbehälter angesammelten Suspension ein Strom von 412,5 kg pro Stunde in die Kammer 1 der Rührkolonne gepumpt. Die Aufheizung erfolgte wie im Beispiel 2a, Suspension mit Produkt 2f wurde entsprechend am Kolonnenausgang mit einer Temperatur von 92 ± 1 °C abgenommen.

Dieses Produkt wies einen gegenüber den anderen Patentbeispielen deutlich verringerten Eisengehalt von nur 0,11 % $Fe_2O_3$, bezogen auf wasserfreie Substanz, auf.

## Beispiel 3

Zur Durchführung des Beispiels 3 wurde ein Rohrreaktor mit einem Gesamtvolumen von circa 200 l und einem Rohrdurchmesser (innen) von 38 mm verwendet ; durch 44 Umlenkungen in Abständen von etwa 4 Metern war der Reaktor kompakt gebaut und erforderte eine Grundfläche von nur 20 Quadratmetern. Der Rohrreaktor war vollständig von einem Heizmantel (Heißwasser) umgeben, der in insgesamt 10 Zonen für unterschiedliche Beheizung (im Beispiel jedoch jeweils die Zeolithisierungstemperatur von 95 °C) unterteilt war.

In die Mischvorlage wurden kotinuierlich und gleichmäßig pro Stunde 57,4 kg technische Natronlauge, 24,3 kg Metakaolin und 164,3 kg entionisiertes Wasser zu resultierenden Gesamtmolverhältnissen von 3,36 $Na_2O$ : 1 $Al_2O_3$ : 2,03 $SiO_2$ : 100 $H_2O$ vermischt. Nach etwa einhalbstündiger Befüllung der Mischvorlage wurden hieraus pro Stunde 200 l Suspension entsprechend 246 kg mit einer Temperatur von 27 °C in den Rohrreaktor gepumpt. Die direkte Aufheizung mit Wasserdampf in Stufen von jeweils etwa 13 °C auf 92 ± 2 °C erfolgte über 5 Stutzen, die in Abständen von jeweils etwa 6 Metern stromabwärts hintereinander angeordnet waren. Produkt-Suspension mit einer Temperatur von 95 ± 1 °C wurde am Ende des Rohrreaktors entnommen.

(Siehe Tabelle 1 Seite 11 f.)

Tabelle 1

| Produkt aus Beispiel | CaBv | % $H_2O$ | Gewichts-% Grit 50 µm-Sieb a) | Gewichts-% Grit 25 µm-Sieb b) | Korngrößenverteilung (Volumen-%) c) > 3 µm | > 5 µm | > 7 µm | > 10 µm | Verteilungsdichtemaximum im µm d) |
|---|---|---|---|---|---|---|---|---|---|
| 1 a | 125 | 11.5 | 0.04 | -- | 91 | 51 | 28 | 5 | 4.0 - 5.0 |
| 1 b | 143 | 15.4 | 0.05 | -- | 81 | 21 | 8 | 3 | 4.0 - 5.0 |
| 1 c | 115 | 11.2 | 0.08 | 0.05 | 98 | 74 | 58 | 19 | 6.3 - 7.9 |
| 1 d | 128 | 12.4 | 0.11 | 0.10 | 94 | 72 | 55 | 21 | 6.3 - 7.9 |
| 2 a | 152 | 12.4 | <0.02 | -- | 71 | 23 | 9 | 2 | 4.0 - 5.0 |
| 2 b | 140 | 13.4 | <0.02 | -- | 83 | 31 | 12 | 3 | 4.0 - 5.0 |
| 2 c | 154 | 14.9 | <0.02 | -- | 81 | 44 | 25 | 5 | 4.0 - 5.0 |
| 2 d | 135 | 12.8 | 0.12 | 0.08 | 97 | 80 | 66 | 21 | 6.3 - 7.9 |
| 2 e | 147 | 14.1 | 0.05 | -- | 66 | 21 | 9 | 3 | 3.2 - 4.0 |
| 2 f | 135 | 14.2 | 0.15 | 0.10 | 97 | 86 | 73 | 43 | 6.3 - 7.9 |
| 3 | 155 | 15.8 | <0.02 | -- | 73 | 22 | 10 | 2 | 4.0 - 5.0 |

a) druckfrei ermittelt
b) Wasserdruck 4 bar
c) mit Coulter Counter$^R$ bestimmt
d) Lage des Coulter-Counter$^R$-Kanals, in dem das Maximum auftrat

**Patentansprüche**

1. Verfahren zur kontinuierlichen Umwandlung von Metakaolin in feinstteiliges, gritarmes, wasserhaltiges zeolithisches Natriumaluminiumsilikat der Zusammensetzung :

$$0{,}9 \text{ bis } 1{,}1\ Na_2O : 1\ Al_2O_3 : 1{,}8 \text{ bis } 2{,}3\ SiO_2,$$

welches zu mindestens 99,8 Gewichtsprozent eine Teilchengröße von kleiner als 25 µm sowie ein hohes Kationenaustauschvermögen aufweist und in Form einer wäßrig alkalischen Suspension anfällt,

a) durch Umsetzen von Metakaolin mit Natriumhydroxid bei Temperaturen im Bereich von 70 bis 100 °C in einem mehrstufigen Durchflußreaktor,

b) in einer wäßrig alkalischen Suspension, die eine Zusammensetzung entsprechend Molverhältnissen von

$$1{,}5 \text{ bis } 5\ Na_2O : 1\ Al_2O_3 : 1{,}8 \text{ bis } 2{,}3\ SiO_2 : 40 \text{ bis } 200\ H_2O$$

aufweist und durch Vermischen von Metakaolin mit wäßriger Natronlauge gewonnnen wird, dadurch gekennzeichnet, daß man

c) die Suspension langsam auf die Zeolithisierungs-Temperatur im Bereich von 70 bis 100 °C aufheizt, bei einer Temperatursteigerung von im Mittel 20 °C innerhalb von 2 bis 10 Minuten,

d) die Suspension kontinuierlich einen stufig wirkenden und/oder stufig ausgeführten Reaktor mit mindestens 7 Stufen durchströmen läßt, in welchem eine verringerte Vermischung der Volumenelemente in Strömungsrichtung eine verringerte Wechselwirkung von Natriumaluminiumsilikat-Teilchen unterschiedlichen Zeolithisierungsgrades beziehungsweise unterschiedlicher Kristallinität bedingt und wobei in den jeweiligen Stufen zur Vermeidung einer Sedimentation die Suspension hinreichend durchmischt werden muß,

e) die Suspension bei einer Temperatur von 70 bis 100 °C solange im Reaktor hält, bis der röntgenographisch ermittelbare Kristallisationsgrad des gebildeten zeolithischen Natriumaluminiumsilikats mindestens 80 % der theoretisch erzielbaren Kristallinität erreicht hat, und anschließend

f) die gewonnene Suspension des kristallinen zeolithischen Natriumaluminiumsilikates an dem Eingangsteil entgegengesetzten Ende des Reaktors ausströmen läßt.

2. Verfahren nach Anspruch 1 dadurch gekennzeichnet, daß man die Suspension mit einem Durchsatz im Bereich von 1 bis 3, vorzugsweise 1 bis 2, Kubikmeter Suspension pro Kubikmeter Reaktorvolumen und Stunde den Reaktor durchströmen läßt.

3. Verfahren nach Anspruch 1 und 2 dadurch gekennzeichnet, daß man das Aufheizen der Suspension auf die gewünschte Zeolithisierungstemperatur innerhalb des Reaktors vornimmt.

4. Verfahren nach Anspruch 1 und 2 dadurch gekennzeichnet, daß man eine Suspension der Zusammensetzung

$$2 \text{ bis } 3\ Na_2O : 1\ Al_2O_3 : 1{,}8 \text{ bis } 2{,}2\ SiO_2 : 40 \text{ bis } 80\ H_2O$$

bei einer Temperatur im Bereich von 75 bis 95 °C der Umsetzung unterwirft.

5. Verfahren nach Anspruch 1 bis 4 dadurch gekennzeichnet, daß man die Umsetzung in durch Rohrleitungen miteinander verbundenen mit Rührvorrichtungen versehenen Kesseln einer Rührkesselkaskade vornimmt, die mindestens 7 Kessel umfaßt.

6. Verfahren nach Anspruch 1 bis 4 dadurch gekennzeichnet, daß man die Umsetzung in einer vorzugsweise vertikal angeordneten Rührkolonne vornimmt, die durch geeignete Zwischenböden in mindestens 7 Kammern unterteilt ist.

7. Verfahren nach Anspruch 1 bis 4 dadurch gekennzeichnet, daß man die Umsetzung in einem Rohrreaktor vornimmt, der ein Verhältnis von Rohrlänge zu Rohrdurchmesser im Bereich von 3 000 bis 7 000, vorzugsweise von 5 000, aufweist.

**Claims**

1. A process for the continuous conversion of metakaolin into a very finely divided, low-grit, water-containing zeolitic sodium aluminium silicate having the composition :

$$0.9 \text{ to } 1.1\ Na_2O : 1\ Al_2O_3 : 1.8 \text{ to } 2.3\ SiO_2,$$

of which at least 99.8 % by weight has a particle size of less than 25 µm and which has a high cation exchange capacity and accumulates in the form of an aqueous-alkaline suspension,

a) by reaction of metakaolin with sodium hydroxide at temperatures of 70 to 100 °C in a multistage throughflow reactor,

b) in an aqueous-alkaline suspension which has a composition corresponding to molar ratios of

$$1.5 \text{ to } 5\ Na_2O : 1\ Al_2O_3 : 1.8 \text{ to } 2.3\ SiO_2 : 40 \text{ to } 200\ H_2O$$

and is obtained by mixing of metakaolin with aqueous sodium hydroxide, characterized in that

c) the suspension is heated slowly to the zeolitizing temperature of 70 to 100 °C, the temperature being increased by on average 20 °C every 2 to 10 minutes,

d) the suspenson is allowed to flow continuously through a reactor acting in stages and/or designed in stages comprising at least 7 stages, in which reduced mixing of the volume elements in the direction of flow produces a reduced interaction of sodium aluminium silicate particles differing in their degree of zeolitization or their crystallinity and the suspension having to be adequately intermixed in the respective stages to avoid sedimentation,

e) the suspension is kept at a temperature of 70 to 100 °C in the reactor until the degree of crystallization of the zeolitic sodium aluminium silicate formed, as determined by radiography, has reached at least 80 % of the theoretically obtainable crystallinity, after which

f) the resulting suspension of the crystalline zeolitic sodium aluminium silicate is allowed to flow out from that end of the reactor opposite its entrance.

2. A process as claimed in claim 1, characterized in that the suspension is allowed to flow through the reactor at a throughput of 1 to 3 and preferably 1 to 2 cubic meters suspension per cubic meter reactor volume per hour.

3. A process as claimed in claims 1 and 2, characterized in that the suspension is heated to the desired zeolitizing temperature in the reactor.

4. A process as claimed in claims 1 and 2, characterized in that a suspension having the composition

$$2 \text{ to } 3\ Na_2O : 1\ Al_2O_3 : 1.8 \text{ to } 2.2\ SiO_2 : 40 \text{ to } 80\ H_2O$$

is subjected to the reaction at a temperature in the range from 75 to 95 °C.

5. A process as claimed in claims 1 to 4, characterized in that the reaction is carried out in stirrer-equipped tanks of a cascade of stirred tanks comprising at least 7 tanks which are interconnected by pipes.

6. A process as claimed in claims 1 to 4, characterized in that the reaction is carried out in a preferably vertically arranged stirred column which is divided by suitable plates into a least 7 compartments.

7. A process as claimed in claims 1 to 4, characterized in that the reaction is carried out in a tube reactor in which the ratio of tube length to tube diameter is from 3 000 to 7 000 and is preferably 5 000.

**Revendications**

1. Procédé de conversion continue de métakaolin en aluminosilicate de sodium zéolitique extrêmement fin, contenant de l'eau et presque exempt de corps étrangers, d'une composition de

$$0{,}9 \text{ à } 1{,}1\ Na_2O : 1\ Al_2O_3 : 1{,}8 \text{ à } 2{,}3\ SiO_2,$$

comportant au moins 99,8 % en poids de particules de dimensions inférieures à 25 µm, avec un pouvoir d'échange de cations élevé, et qui est obtenu sous forme d'une suspension alcaline aqueuse,

a) par réaction du métakaolin avec de l'hydroxyde de sodium à des températures dans l'intervalle de 70 à 100 °C, dans un réacteur continu comportant plusieurs étages,

b) dans une suspension alcaline aqueuse présentant une composition correspondante de rapports molaires de

$$1{,}5 \text{ à } 5\ Na_2O : 1\ Al_2O_3 : 1{,}8 \text{ à } 2{,}3\ SiO_2 : 40 \text{ à } 200\ H_2O$$

et qui est obtenue en mélangeant le métakaolin avec de la lessive sodique aqueuse, caractérisé en ce que

c) on chauffe la suspension graduellement jusqu'à la température de zéolitisation dans l'intervalle de 70 à 100 °C, avec un incrément de température situé autour de 20 °C dans les 2 à 10 minutes,

d) on laisse la suspension parcourir continuellement un réacteur opérant en étages et/ou construit en étages, avec au moins 7 étages dans lequel une diminution du mélange d'éléments volumiques dans le sens de l'écoulement engendre une réduction de l'interaction des particules d'aluminosilicate de sodium dont le degré de zéolitisation, respectivement le degré de cristallisation diffèrent, et dans lequel la suspension doit être suffisamment mélangée dans chaque étage afin de prévenir la sédimentation,

e) on retient la suspension dans le réacteur à une température de 70 à 100 °C aussi longtemps que nécessaire pour obtenir un degré de cristallisation de l'aluminosilicate de sodium déterminé par radiographie aux rayons X d'au moins 80 % de la cristallinité théoriquement obtenable,

f) on décharge ensuite la suspension obtenue de l'aluminosilicate de sodium cristallin zéolitique par l'extrémité opposée à l'entrée du réacteur.

2. Procédé selon la revendication 1, caractérisé en ce qu'on laisse la suspension parcourir le

réacteur avec un débit de l'ordre de 1 à 3, de préférence de 1 à 2 mètres cubes de suspension par mètre cube de volume du réacteur et par heure.

3. Procédé selon la revendication 1 et la revendication 2, caractérisé en ce qu'on effectue le chauffage de la suspension jusqu'à la température désirée pour la zéolitisation à l'intérieur même du réacteur.

4. Procédé selon la revendication 1 et la revendication 2, caractérisé en ce qu'on effectue la réaction à partir d'une suspension de composition

$$2 \text{ à } 3\ Na_2O : 1\ Al_2O_3 : 1,8 \text{ à } 2,2\ SiO_2 : 40 \text{ à } 80\ H_2O$$

à une température située dans l'intervalle de 75 à 95 °C.

5. Procédé selon les revendications 1 à 4, caractérisé en ce qu'on effectue la réaction dans des étuves faisant partie d'une cascade d'étuves, comprenant au moins 7 étuves, connectées entre elles par des conduits et munies de dispositifs d'agitation.

6. Procédé selon les revendications 1 à 4, caractérisé en ce qu'on effectue la réaction dans une colonne agitée, disposée de préférence verticalement et qui par des cloisons intermédiaires est divisée en 7 chambres au minimum.

7. Procédé selon les revendications 1 à 4, caractérisé en ce qu'on effectue la réaction dans un réacteur tubulaire, dont le rapport entre la longueur du tube et le diamètre du tube se situe dans l'intervalle de 3 000 à 7 000, étant de préférence de 5 000.

FIG. 1

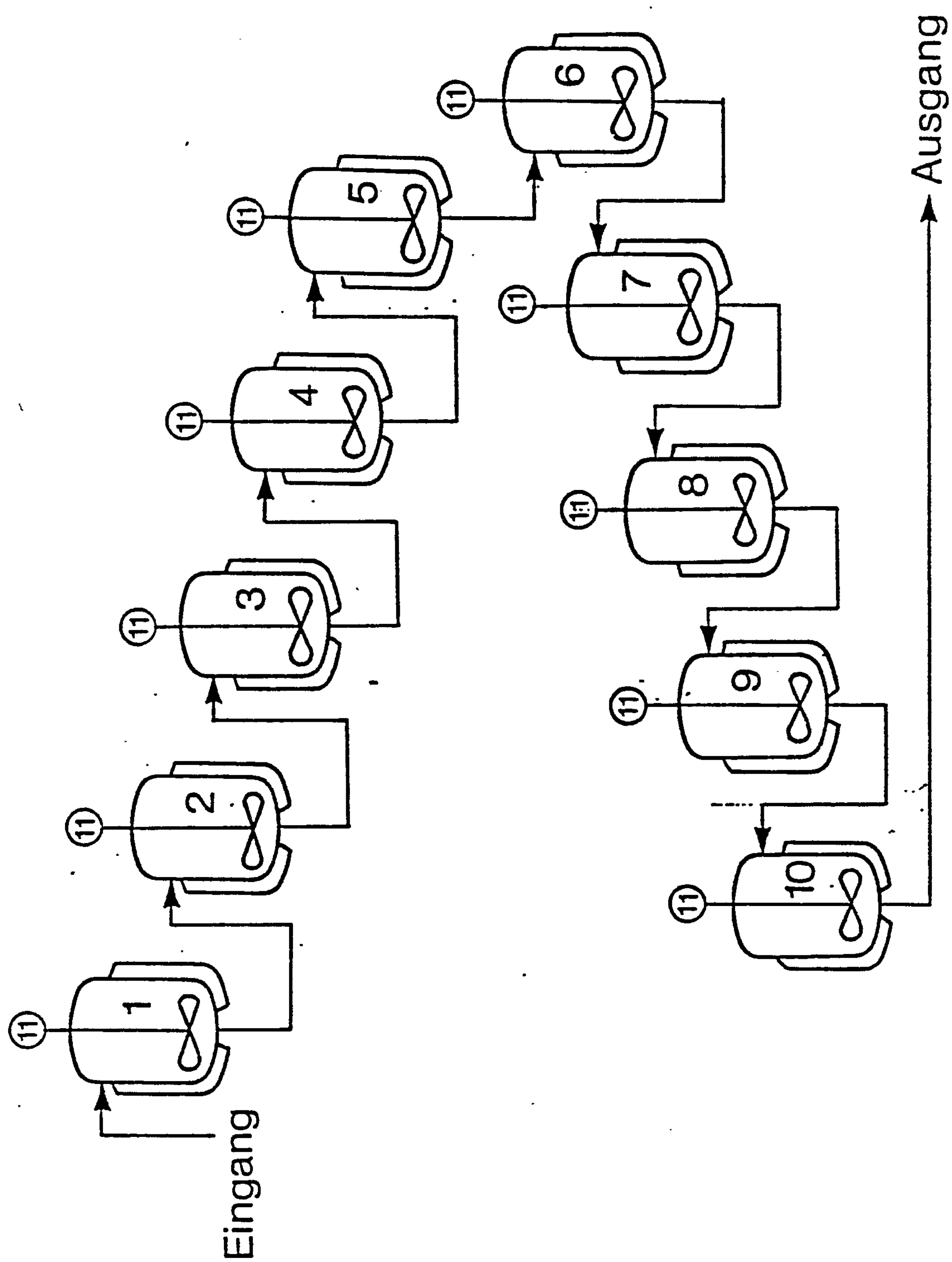

FIG. 2

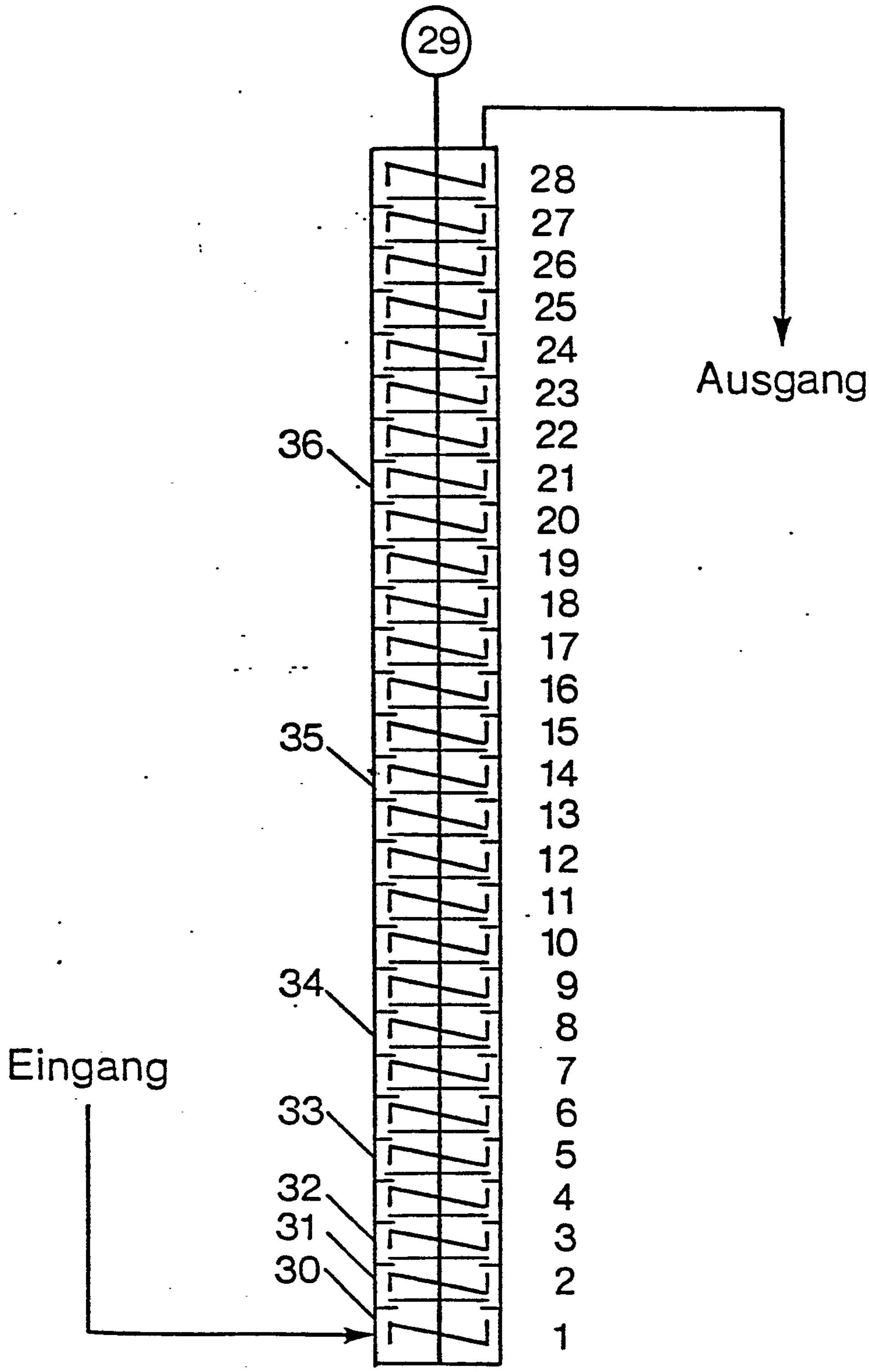
29
28
27
26
25
24
23
22
21
20
19
18
17
16
15
14
13
12
11
10
9
8
7
6
5
4
3
2
1
36
35
34
33
32
31
30
Ausgang
Eingang